# EUROPEAN PATENT APPLICATION

(11) **EP 4 255 072 A1**
(43) Date of publication of application: **04.10.2023**
(21) Application number: 20962918.7
(22) Date of filing: 27.11.2020
(51) Int. Cl.: H04W 72/10

(54) **UPLINK CONTROL INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: dompatent von Kreisler Selting Werner - Partnerschaft von Patent- und Rechtsanwälten mbB
(86) International application number: PCT/CN2020/132298
(87) International publication number: WO 2022/110028

(57) **Abstract**

The present disclosure relates to an uplink control information transmission method and apparatus, and a storage medium. The uplink control information transmission method comprises: determining, on the basis of a priority of uplink control information and a priority of a physical uplink shared channel, a physical uplink shared channel multiplexed by the uplink control information, the priority comprising a first priority or a second priority, and the first priority being higher than the second priority. By means of the present disclosure, a multiplexing implementation scheme can be provided for UCI with different priorities and PUSCHs with different priorities, improving the hybrid transmission performance of services with different priorities.

## Description

### TECHNICAL FIELD

The disclosure relates to a field of communication technologies, in particular to a method for transmitting uplink control information, an apparatus for transmitting uplink control information, and a storage medium.

### BACKGROUND

In the related art, when a Physical Uplink Control channel (PUCCH) carrying uplink control information (UCI) and a Physical Uplink Shared channel (PUSCH) carrying uplink data overlaps in the time domain, the UCI needs to be multiplexed on the PUSCH, and the UCI is not transmitted on the PUCCH channel.

However, the priority of the UCI and the priority of the PUSCH are introduced in the relevant technical protocols, and how to multiplex the UCI on the PUSCH when the UCI of various priorities and one or more PUSCHs of various priorities overlap in the time domain is a problem that needs to be studied.

### SUMMARY

To overcome the problem existing in the related art, the disclosure provides a method for transmitting uplink control information, an apparatus for transmitting uplink control information and a storage medium.

According to a first aspect of the disclosure, a method for transmitting uplink control information is provided. The method includes:
determining, based on a priority of uplink control information and a priority of a Physical Uplink Shared Channel, a Physical Uplink Shared Channel for multiplexing the uplink control information, in which the priority is a first priority or a second priority, and the first priority is higher than the second priority.

In an implementation, a Physical Uplink Control Channel carrying the uplink control information and more than one Physical Uplink Shared Channels overlap in the time domain.

In an implementation, the priority of the uplink control information is the first priority, and the priority of the Physical Uplink Shared Channel for multiplexing the uplink control information is the first priority.

In an implementation, the priority of the uplink control information is the second priority, and the priority of the Physical Uplink Shared Channel for multiplexing the uplink control information is the first priority.

In an implementation, the method further includes: determining that it is configured to allow the uplink control information of the second priority to be multiplexed on the Physical Uplink Shared Channel of the first priority.

In an implementation, the method further includes: based on a radio resource control signaling, determining that it is configured to allow the uplink control information of the second priority to be multiplexed on the Physical Uplink Shared Channel of the first priority.

In an implementation, the priority of the uplink control information is the second priority, and the priority of the Physical Uplink Shared Channel for multiplexing the uplink control information is the second priority.

In an implementation, the method further includes:
determining that it is configured to not allow the uplink control information of the second priority to be multiplexed on a Physical Uplink Shared Channel of the first priority.

In an implementation, a Physical Uplink Control Channel carrying the uplink control information and one Physical Uplink Shared Channel overlap in the time domain, and the Physical Uplink Shared Channel for multiplexing the uplink control information is the Physical Uplink Shared Channel that overlaps in the time domain with the Physical Uplink Control Channel carrying the uplink control information.

In an implementation, the priority of the Physical Uplink Shared Channel for multiplexing the uplink control information is the first priority.

In an implementation, the priority of the uplink control information is determined based on downlink control information or the radio resource control information.

In an implementation, the priority of the Physical Uplink Shared Channel is determined based on downlink control information or radio resource control information.

According to a second aspect of the disclosure, an apparatus for transmitting uplink control information is provided. The apparatus includes:
a processing unit, configured to determine, based on a priority of uplink control information and a priority of a Physical Uplink Shared Channel, a Physical Uplink Shared Channel for multiplexing the uplink control information, in which the priority is a first priority or a second priority, and the first priority is higher than the second priority.

In an implementation, a Physical Uplink Control Channel carrying the uplink control information and more than one Physical Uplink Shared Channel overlap in the time domain.

In an implementation, the priority of the uplink control information is the first priority, and the priority of the Physical Uplink Shared Channel for multiplexing the uplink control information is the first priority.

In an implementation, the priority of the uplink control information is the second priority, and the priority of the Physical Uplink Shared Channel for multiplexing the uplink control information is the first priority.

In an implementation, the processing unit is further configured to: determine that it is configured to allow the uplink control information of the second priority to be multiplexed on the Physical Uplink Shared Channel of the first priority.

In an implementation, the processing unit is further configured to: based on a radio resource control signaling, determine that it is configured to allow the uplink control information of the second priority to be multiplexed on the Physical Uplink Shared Channel of the first priority.

In an implementation, the priority of the uplink control information is the second priority, and the priority of the Physical Uplink Shared Channel for multiplexing the uplink control information is the second priority.

In an implementation, the processing unit is further configured to: determine that it is configured to not allow the uplink control information of the second priority to be multiplexed to the Physical Uplink Shared Channel of the first priority.

In an implementation, a Physical Uplink Control Channel carrying the uplink control information and one Physical Uplink Shared Channel overlap in the time domain, and the Physical Uplink Shared Channel for multiplexing the uplink control information is the Physical Uplink Shared Channel that overlaps in time domain with the Physical Uplink Control Channel carrying the uplink control information.

In an implementation, the priority of the Physical Uplink Shared Channel for multiplexing the uplink control information is the first priority.

In an implementation, the priority of the uplink control information is determined based on downlink control information or radio resource control information.

In an implementation, the priority of the Physical Uplink Shared Channel is determined based on downlink control information or radio resource control information.

According to a third aspect of the disclosure, a device for transmitting uplink control information is provided. The device includes:
a processor; and a memory for storing instructions executable by the processor; in which
the processor is configured to perform a method for transmitting uplink control information according to the first aspect of the disclosure or any implementation of the first aspect.

According to a fourth aspect of the disclosure, a non-transitory computer-readable storage medium is provided. When instructions in the storage medium are executed by a processor of a mobile terminal, the mobile terminal is caused to perform a method for transmitting uplink control information according to the first aspect of the disclosure or any implementation of the first aspect.

The technical solutions according to the embodiments of the disclosure may include the following beneficial effects. Based on the priority of the uplink control information, the Physical Uplink Shared Channel for multiplexing the uplink control information is determined, such that for each of UCIs of various priorities, the Physical Uplink Shared Channel for multiplexing the uplink control information is determined when the uplink control information and one or more Physical Uplink Shared Channels of various priorities overlap in the time domain.

It is understandable that both the foregoing general description and the following detailed description are illustrative and explanatory only and are not constructed to limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram illustrating a radio communication system according to an embodiment.
FIGS. 2A-2B are flowcharts illustrating a method for transmitting UCI according to an embodiment.
FIGS. 3A-3B are flowcharts illustrating a method for transmitting UCI according to an embodiment.
FIG. 4 is a block diagram illustrating an apparatus for transmitting UCI according to an embodiment.
FIG. 5 is a block diagram illustrating a device for transmitting UCI according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

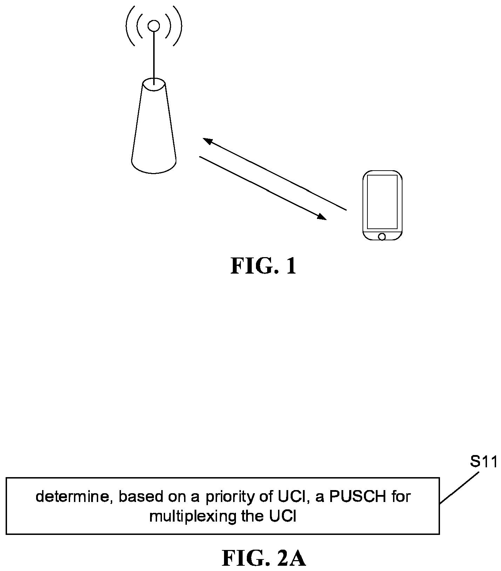

The method according to embodiments of the disclosure may be applied to the radio communication system illustrated in FIG. 1. As illustrated in FIG. 1, the radio communication system includes a terminal and a network device. The terminal is connected to the network device via radio resources to perform data transmission and reception.

It is understandable that the radio communication system illustrated as FIG. 1 is illustrated schematically only, and other network devices may be included in the radio communication system, such as core network device, a radio relay device, a radio backhaul device, etc., which are not shown in FIG. 1. The number of network devices and the number of terminals included in the radio communication system are not limited in the embodiments of the disclosure.

It is further understandable that the radio communication system of the embodiments of the disclosure is a network that provides radio communication functions. The radio communication system may employ different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and carrier sense multiple access with collision avoidance. Depending on the capacity, rate, and delay of different networks, the network can be classified as a 2G (i.e., second generation) network, a 3G network, a 4G network, or a future evolved network, such as a 5G network, which can also be called a New Radio (NR) network. For the convenience of description, this disclosure sometimes refers to the radio communication network simply as network.

The network device involved in the disclosure may also be referred to as a radio access network device. The radio access network device may be: a base station, an evolved base station (eNB), a home base station, an Access Point (AP) in a wireless fidelity (WIFI) system, a radio relay node, a radio backhaul node, a Transmission Point (TP) or a Transmission and Reception Point (TRP), a gNB in an NR system, or components or part of the devices that constitute the base station. The network device may also be an in-vehicle device in a Vehicle to Everything (V2X) communication system. It is understandable that in the embodiments of the disclosure, the specific technology and the specific device form used by the network device are not limited.

The terminal involved in the disclosure may also be referred to as terminal device, User Equipment (UE), Mobile Station (MS), or Mobile Terminal (MT), which is a device that provides voice and/or data connectivity to a user. For example, the terminal can be a handheld device or a vehicle-mounted device with wireless connectivity function. Currently, some examples of terminals include: mobile phone, Pocket Personal Computer (PPC), hand-held computer, Personal Digital Assistant (PDA), laptop, tablet computer, wearable device, or vehicle-mounted device. In addition, the terminal device may also be a vehicle-mounted device in the V2X communication system. It is understandable that the specific technology and the specific device form used by the terminal is not limited in this disclosure.

In the related art, the terminal can send uplink control information (UCI) to the network device during the communication process between the terminal and the network device. As an example, the terminal sends a Hybrid Automatic Repeat request Acknowledge character (HARQ-ACK) for a Physical Downlink Shared Channel (PDSCH). As another example, the terminal sends a Scheduling Request (SR) to the network device to request scheduling corresponding resources. The UCI is transmitted on a Physical Uplink Control Channel (PUCCH).

In the related art, when the PUCCH carrying the UCI and the PUSCH carrying uplink data overlap in the time domain, the UCI can be multiplexed on the PUSCH.

In the R15 communication protocol, multiplexing the UCI on the PUSCH refers to when the PUCCH carrying the UCI overlaps in the time domain with one or more PUSCHs, multiplexing the UCI on a dynamically-scheduled PUSCH preferentially and multiplexing the UCI on a semi-persistently scheduled PUSCH if there is no dynamically-scheduled PUSCH. In addition, if there are two or more dynamically-scheduled PUSCHs, the UCI is multiplexed on the PUSCH with the smallest carrier index among the two or more dynamically-scheduled PUSCHs. If there are two or more PUSCHs on one carrier, the UCI is multiplexed on the PUSCH with the earliest starting time in the time domain.

In the R16 communication protocol, the priority is introduced for the UCI and PUSCH. For example, the HARQ-ACK or the SR (where the HARQ-ACK and the SR are each a kind of UCI) has a high priority or a low priority, and the PUSCHs have various priorities. For the UCI of a high priority and the PUSCH of a low priority, multiplexing the UCI on the PUSCH includes: directly sending the UCI of the high priority and discarding the PUSCH of the low priority. For the UCI of a low priority and the PUSCH of a high priority, multiplexing the UCI on the PUSCH includes: directly sending the PUSCH of the high priority and discarding the UCI of the low priority.

In conclusion, in the related art, there is no solution to solve a problem of how to multiplex the UCI on the PUSCH if a communication condition for multiplexing the UCI on the PUSCH for transmission is satisfied, in which for example the communication condition is that the PUCCH carrying the UCI of a certain priority among various priorities overlaps in the time domain with one or more PUSCHs of various priorities. The R17 communication protocol proposes a need to discuss scenarios and schemes of UCI/PUSCH multiplexing with different priorities, to enhance the performance of mixed transmission performance of services with different priorities.

Embodiments of the disclosure provide a method for transmitting UCI. In the method, a PUSCH for multiplexing the UCI is determined based on the priority of the UCI and/or one or more priorities of one or more PUSCHs.

For the convenience of description in the disclosure, the first priority and the second priority are used to represent various priorities for the UCI and the one or more PUSCHs. The first priority is different from the second priority, and the first priority is higher than the second priority.

It is understandable that the method for transmitting UCI according to embodiments of the disclosure can be implemented if the communication condition for multiplexing the UCI on the PUSCH for transmission is satisfied, without distinguishing the specific communication scenarios. For example, the method for transmitting UCI according to embodiments of the disclosure can be applied when the PUCCH carrying the UCI of a certain priority among various priorities and one or more PUSCHs of various priorities overlap in the time domain.

FIG. 2A is a flowchart illustrating a method for transmitting UCI according to an embodiment. As illustrated in FIG. 2A, the method for transmitting UCI is performed by a terminal and the method includes the following.

At block S11, a PUSCH for multiplexing the UCI is determined based on a priority of UCI.

The priority is a first priority or a second priority, and the first priority is higher than the second priority.

In embodiments of the disclosure, the PUSCH for multiplexing the UCI is determined based on the priority of the UCI, such that the PUSCH for multiplexing the UCI can be determined when the UCI of a certain priority among various priorities and one or more PUSCHs of various priorities overlap in the time domain.

In embodiments of the disclosure, the UCI may be, for example, a HARQ-ACK for the PDSCH, or SR information.

The priority of the UCI can be determined based on radio resource control (RRC) information or downlink control information (DCI) information.

For instance, the UCI is the HARQ-ACK information for the PDSCH, and the priority of the UCI is determined based on the RRC information or the DCI information. As an example, the UCI is the HARQ-ACK information of a dynamically-scheduled PDSCH, and the priority of the UCI may be indicated by the DCI of the dynamically-scheduled PDSCH. As another example, the UCI is the HARQ-ACK information of a semi-persistently scheduled PDSCH, and the priority of the UCI may be configured via a RRC layer signaling.

In an example, the UCI is a semi-persistently configured SR signaling. The priority of the UCI is determined based on the RRC information.

In embodiments of the disclosure, the priority of the UCI may be understood to be a physical layer priority of the UCI.

The method for transmitting UCI according to embodiments of the disclosure may also include a process of determining the priority of the UCI.

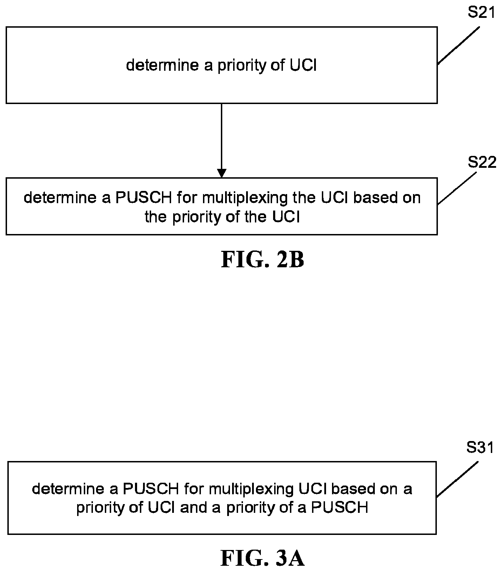

FIG. 2B is a flowchart illustrating a method for transmitting UCI according to an embodiment. As illustrated in FIG. 2B, the method for transmitting UCI is performed by a terminal and the method includes the following.

At block S21, a priority of the UCI is determined.

The priority is a first priority or a second priority, and the first priority is higher than the second priority.

In an example, the priority of the UCI is determined based on RRC information or DCI information.

At block S22, a PUSCH for multiplexing the UCI is determined based on the priority of the UCI.

In embodiments of the disclosure, the PUSCH for multiplexing the UCI is determined based on the priority of the UCI, such that for each of UCIs of various priorities, the PUSCH for multiplexing the UCI can be determined when the UCI and one or more PUSCHs of various priorities overlap in the time domain.

In another implementation, with the method for transmitting UCI according to embodiments of the disclosure, the PUSCH for multiplexing the UCI can be determined based on the priority of the UCI and a priority of the PUSCH.

FIG. 3A is a flowchart illustrating a method for transmitting UCI according to an embodiment. As illustrated in FIG. 3A, the method for transmitting UCI is performed by a terminal and the method includes the following.

At block S31, a PUSCH for multiplexing the UCI is determined based on a priority of UCI and a priority of a PUSCH.

The priority of the UCI is a first priority or a second priority. The priority of the PUSCH is a first priority or a second priority. The first priority is higher than the second priority.

In embodiments of the disclosure, the priority of the UCI is determined based on RRC information or DCI information.

In embodiments of the disclosure, the priority of the PUSCH may be determined based on RRC information or DCI information. As an example, if the PUSCH is a dynamically-scheduled PUSCH, the priority of the PUSCH may be dynamically indicated by the DCI of the dynamically-scheduled PUSCH. As another example, if the PUSCH is a semi-persistently scheduled PUSCH, such as a Configured Grant PUSCH (CG-PUSCH), the priority of the PUSCH can be configured based on the RRC information.

The method for transmitting UCI according to embodiments of the disclosure may include determining the priority of the UCI and the priority of the PUSCH.

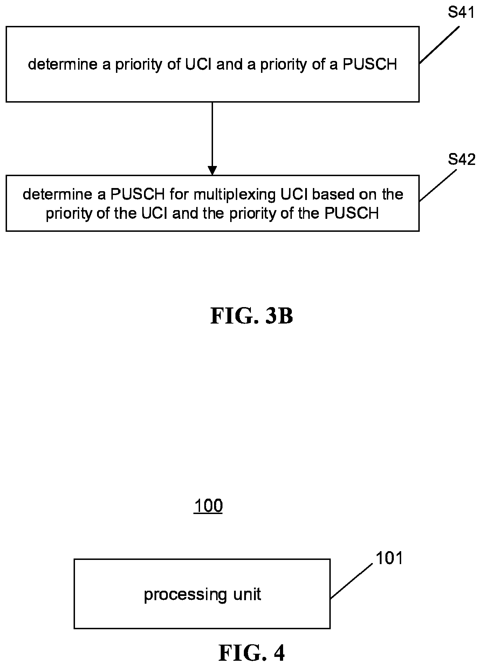

FIG. 3B is a flowchart illustrating a method for transmitting UCI according to an embodiment. As illustrated in FIG. 3B, the method for transmitting UCI is performed by a terminal and the method includes the following.

At block S41, a priority of UCI and a priority of a PUSCH are determined.

The priority of the UCI is a first priority or a second priority. The priority of the PUSCH is a first priority or a second priority. The first priority is higher than the second priority.

In an example, the priority of the UCI is determined based on RRC information or DCI information.

In an example, the priority of the PUSCH is determined based on RRC information or DCI information.

At step S42, based on the priority of the UCI and the priority of the PUSCH, a PUSCH for multiplexing the UCI is determined.

The implementation of multiplexing the UCI on the PUSCH will be described in the following embodiments of the disclosure.

The "PUSCH" described in the disclosure may be one or more PUSCHs that overlaps in the time domain with the PUCCH carrying the UCI. The PUSCH for multiplexing the UCI may also be understood to be a PUSCH that overlaps in the time domain with the PUCCH carrying the UCI.

In an implementation, there may be one or more PUSCHs that overlap in the time domain with the PUCCH carrying the UCI. When more than one PUSCH overlap with the PUCCH carrying the UCI in the time domain, each PUSCH may have a respective priority.

For the case where the PUCCH carrying the UCI overlaps with more than one PUSCH in the time domain, the PUSCH for multiplexing the UCI can be determined based on the priority of the UCI and the priorities of the more than one PUSCH.

In an implementation, when the PUCCH carrying the UCI overlaps with more than one PUSCH in the time domain, a respective priority of each PUSCH overlapping with the PUCCH in the time domain may be either the first priority or the second priority, where the first priority is higher than the second priority. That is, the more than one PUSCH overlapping with the PUCCH in the time domain may have different priorities.

In an example, if the priorities of PUSCHs that overlap with the PUCCH in the time domain are respectively the first priority and the second priority and the priority of the UCI is the first priority (i.e., the high priority), then the PUSCH for multiplexing the UCI is the PUSCH of the first priority (i.e., the high priority). That is, the UCI of the high priority is preferentially multiplexed on the PUSCH of the high priority, to avoid the situation that the UCI multiplexed on the PUSCH of the low priority is punched or discarded.

In another example, if the priorities of PUSCHs that overlap with the PUCCH in the time domain are respectively the first priority and the second priority and the priority of the UCI is the second priority (i.e., the low priority), then the PUSCH for multiplexing the UCI is the PUSCH of the first priority (i.e., the high priority). That is, the UCI of the low priority is multiplexed on the PUSCH of the high priority, which can also be understood as that the UCI is preferentially multiplexed on the PUSCH of the high priority.

In an implementation, if the priority of the UCI is the second priority (i.e., the low priority), the terminal needs to determine that it is configured to allow the UCI of the second priority to be multiplexed on the PUSCH of the first priority. When it is determined that the UCI of the second priority is allowed to be multiplexed on the PUSCH of the first priority, the UCI can be preferentially multiplexed on the PUSCH of the first priority (i.e., the high priority).

In an implementation, in the embodiment of the disclosure, it can be configured, based on RRC parameters, that the UCI of the second priority is allowed to be multiplexed on the PUSCH of the first priority. For example, the RRC parameters are used to configure to allow the HARQ-ACK/SR of the low priority to be multiplexed on the PUSCH of the high priority.

In another example, if the priorities of the PUSCHs that overlap with the PUCCH in the time domain are respectively the first priority and/or the second priority and the priority of the UCI is the second priority (i.e., the low priority), then the PUSCH for multiplexing the UCI is the PUSCH of the second priority (i.e., the low priority). That is, the UCI of the low priority can be multiplexed on the PUSCH of the low priority.

In an implementation of the disclosure, if the priority of the UCI is the second priority (i.e., the low priority), the terminal needs to determine that it is configured to not allow the UCI of the second priority to be multiplexed on the PUSCH of the first priority, and then the UCI is multiplexed on the PUSCH of the second priority (i.e., the low priority). That is, when the terminal determines that the UCI of the low priority is not allowed to be multiplexed on the PUSCH of the high priority, the determined PUSCH for multiplexing the UCI is the PUSCH of the low priority.

In an implementation, in embodiments of the disclosure, it can be configured, based on RRC parameters, that the UCI of the second priority is not allowed to be multiplexed on the PUSCH of the first priority. For example, the RRC parameters are used to configure to not allow the HARQ-ACK/SR of the low priority to be multiplexed on the PUSCH of the high priority.

In an implementation, regardless of whether the priority of the UCI is the first priority or the second priority, the UCI is preferentially multiplexed on the PUSCH of the high priority. In other words, no matter whether the priority of the UCI is the first priority or the second priority, the PUSCH for multiplexing the UCI is the PUSCH of the first priority (i.e., the high priority).

It is understandable that in the case that the UCI of the low priority is not allowed to be multiplexed on the PUSCH of the high priority, the UCI of the low priority cannot be multiplexed on the PUSCH of the first priority (i.e., the high priority).

In another implementation of the disclosure, for the case where the PUCCH carrying the UCI overlaps with one PUSCH in the time domain, in which the priority of the PUSCH is either the first priority or the second priority and the first priority is higher than the second priority, the PUSCH for multiplexing the UCI is the PUSCH that overlaps with the PUCCH carrying the UCI in time domain.

It is understandable that the above-described method for transmitting UCI according to embodiments of the disclosure can be implemented when a communication condition for multiplexing the UCI on the PUSCH for transmission is satisfied, without distinguishing the specific communication scenarios. In an example, the method for transmitting UCI according to embodiments of the disclosure can be applied when the PUCCH carrying the UCI and one or more PUSCHs of various priorities overlap in the time domain, to provide solutions of UCI multiplexing for the UCIs of different priorities and the PUSCHs of various priorities, thereby enhancing the performance of mixed transmission of services with different priorities.

It is understandable by those skilled in the art that various implementations/embodiments involved in the above-described embodiments of the disclosure can be used in combination with the preceding embodiments or can be used independently. The implementation principles are similar when used alone or in combination with the aforementioned embodiments. Some of the embodiments of the disclosure illustrated in the embodiments are used together. Certainly, it is understandable by those skilled in the art that such illustration by example is not a limitation of the embodiments of the disclosure.

In an example, the embodiments of the disclosure may determine the PUSCH for multiplexing the UCI based on the priority of the UCI and the one or more priorities of the one or more PUSCHs.

In response to determining that the PUCCH carrying the UCI overlaps with two or more PUSCHs in the time domain, the UCI is preferentially multiplexed on the PUSCH of the first priority.

In an implementation, in response to determining that the PUCCH carrying the UCI overlaps with two or more PUSCHs in the time domain and the priority of the UCI is the first priority, the UCI is multiplexed on the PUSCH of the first priority.

In an implementation, in response to determining that the PUCCH carrying the UCI overlaps with two or more PUSCHs in the time domain, the priority of the UCI is the second priority, and it is determined that it is configured to allow the UCI of the second priority to be multiplexed on the PUSCH of the first priority, the UCI is multiplexed on the PUSCH of the first priority.

In an implementation, it is determined, based on the RRC, that it is configured to allow the UCI of the second priority to be multiplexed on the PUSCH of the first priority.

In an implementation, in response to determining that the PUCCH carrying the UCI overlaps with two or more PUSCHs in the time domain, the priority of the UCI is the second priority, and it is determined that it is configured to not allow the UCI of the second priority to be multiplexed on the PUSCH of the first priority, the UCI is multiplexed on the PUSCH of the second priority.

In an implementation, in response to determining that the PUCCH carrying the UCI overlaps with one PUSCH in the time domain, the UCI is multiplexed on the PUSCH that overlaps with the PUCCH carrying the UCI in the time domain.

In an implementation, the priority of the UCI is determined based on DCI or RRC information.

In an implementation, the one or more priorities of the one or more PUSCHs are determined based on DCI or RRC information.

Based on the same concepts, embodiments of the disclosure further provide an apparatus for transmitting UCI.

It is understandable that the apparatus for transmitting UCI according to embodiments of the disclosure contains hardware structures and/or software modules that perform the corresponding functions in order to achieve the above functions. In combination with the units and algorithmic steps of each example disclosed in the embodiments of the disclosure, the embodiments of the disclosure are capable of being implemented in the form of hardware or a combination of hardware and computer software. Whether a particular function is performed in hardware or hardware driven by computer software depends on the particular application and design constraints of the technical solution. Those skilled in the art may use different method for each particular application to implement the described function, but such implementation should not be considered outside the scope of the technical solution of embodiments of the disclosure.

FIG. 4 is a block diagram illustrating an apparatus for transmitting UCI according to an embodiment. As illustrated in FIG. 4, the apparatus 100 includes: a processing unit 101.

The processing unit 101 is configured to determine, based on a priority of UCI and a priority of a PUSCH, a PUSCH for multiplexing the UCI, in which the priority is a first priority or a second priority, and the first priority is higher than the second priority.

In an implementation, a PUCCH carrying the UCI and more than one PUSCH overlap in the time domain.

In an implementation, the priority of the PUSCH for multiplexing the UCI is the first priority.

In an implementation, the priority of the UCI is the first priority, and the priority of the PUSCH for multiplexing the UCI is the first priority.

In an implementation, the priority of the UCI is the second priority, and the priority of the PUSCH for multiplexing the UCI is the first priority.

In an implementation, the processing unit 101 is further configured to: determine that it is configured to allow the UCI of the second priority to be multiplexed on the PUSCH of the first priority.

In an implementation, the processing unit 101 is further configured to: based on a radio resource control signaling, determine that it is configured to allow the UCI of the second priority to be multiplexed on the PUSCH of the first priority.

In an implementation, the priority of the UCI is the second priority, and the priority of the PUSCH for multiplexing the UCI is the second priority.

In an implementation, the processing unit 101 is further configured to: determine that it is configured to not allow the UCI of the second priority to be multiplexed on a PUSCH of the first priority.

In an implementation, a PUCCH carrying the UCI and one PUSCH overlap in the time domain, and the PUSCH for multiplexing the UCI is the PUSCH that overlaps with the PUCCH carrying the UCI in the time domain.

In an implementation, the processing unit 101 is further configured to: determine the priority of the UCI based on DCI or radio resource control information.

In an implementation, the processing unit 101 is further configured to: determine the priorities of the PUSCHs based on DCI or radio resource control information.

Regarding the apparatus in the above embodiment, the specific way in which each module performs its operation has been described in detail in the embodiments concerning the method, and will not be described in detail here.

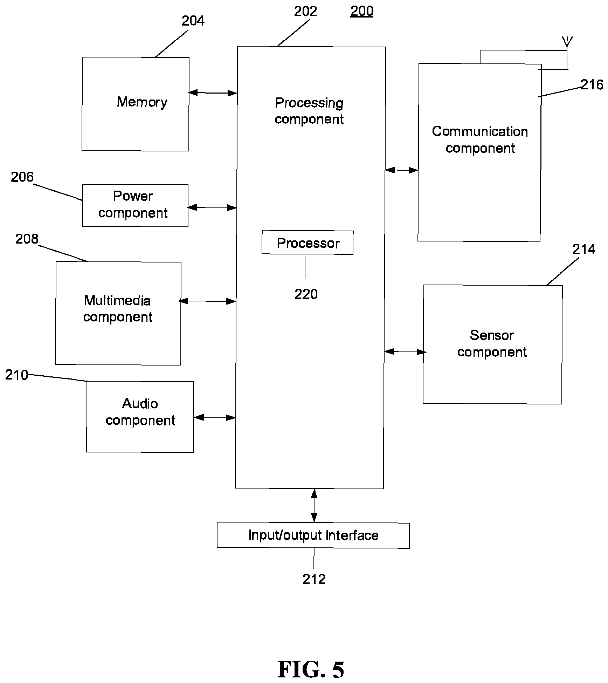

FIG. 5 is a block diagram illustrating a device 200 for transmitting UCI according to an embodiment. For example, the device 200 may be a mobile phone, a computer, a digital broadcasting terminal, a message transceiver device, a game console, a tablet device, a medical device, a fitness device or a personal digital assistant.

As illustrated in FIG. 5, the device 200 may include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the device 200, such as the operations associated with display, telephone calls, data communications, camera operations, and recording operations. The processing component 202 may include one or more processors 220 to perform all or part of the steps in the above described method. Moreover, the processing component 202 may include one or more modules which facilitate the interaction between the processing component 202 and other components. For example, the processing component 202 may include a multimedia module to facilitate the interaction between the multimedia component 208 and the processing component 202.

The memory 204 is configured to store various types of data to support the operation of the device 200. Examples of such data include instructions for any applications or methods operated on the device 200, contact data, phonebook data, messages, pictures, video, etc. The memory 204 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 206 provides power to various components of the device 200. The power component 206 may include a power management system, one or more power sources, and any other components associated with the generation, management, and distribution of power in the device 200.

The multimedia component 208 includes a screen providing an output interface between the device 200 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 208 includes a front-facing camera and/or a rear-facing camera. When the device 200 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 210 is configured to output and/or input audio signals. For example, the audio component 210 includes a microphone (MIC) configured to receive an external audio signal when the device 200 is in an operation mode, such as a call mode, a recording mode, and a voice recognition mode. The received audio signal may be further stored in the memory 204 or transmitted via the communication component 216. In some embodiments, the audio component 210 further includes a speaker to output audio signals.

The I/O interface 212 provides an interface between the processing component 202 and peripheral interface modules, such as a keyboard, a click wheel, buttons, and the like. The buttons may include, but are not limited to, a home button, a volume button, a starting button, and a locking button.

The sensor component 214 includes one or more sensors to provide status assessments of various aspects of the device 200. For instance, the sensor component 214 may detect an open/closed status of the device 200, relative positioning of components, e.g., the display and the keypad, of the device 200, a change in position of the device 200 or a component of the device 200, a presence or absence of user contact with the device 200, an orientation or an acceleration/deceleration of the device 200, and a change in temperature of the device 200. The sensor component 214 may include a proximity sensor configured to detect the presence of nearby objects without any physical contact. The sensor component 214 may also include a light sensor, such as a Complementary Metal Oxide Semiconductor (CMOS) or Charge-Coupled Device (CCD) image sensor, for use in imaging applications. In some embodiments, the sensor component 214 may also include an accelerometer sensor, a gyroscope sensor, a magnetic sensor, a pressure sensor, or a temperature sensor.

The communication component 216 is configured to facilitate communication, wired or wirelessly, between the device 200 and other devices. The device 200 can access a wireless network based on a communication standard, such as WiFi, 2G, or 3G, or a combination thereof. In an embodiment, the communication component 216 receives a broadcast signal or broadcast associated information from an external broadcast management system via a broadcast channel. In an embodiment, the communication component 216 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the embodiment, the device 200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In the embodiments, there is also provided a non-transitory computer readable storage medium including executable instructions, such as the memory 204, executable by the processor 220 in the device 200, for performing the above method. For example, the non-transitory computer-readable storage medium may be a ROM, a Random Access Memory (RAM), a CD-ROM, a magnetic tape, a floppy disc, and an optical data storage device.

It is further understandable that the term "multiple" in the disclosure refers to two or more, and that other quantifiers are similar. The term "and/or" describes the relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

It is further understandable that the terms "first", "second", etc. are used to describe various types of information, but that such information should not be limited to these terms. These terms are used only to distinguish information of the same type from each another and do not indicate a particular order or degree of importance. In fact, the expressions "first" and "second" can be used interchangeably. For example, without departing from the scope of this disclosure, first information may also be referred to as second information, and similarly, second information may also be referred to as first information.

It is further understandable that although the operations are depicted in the accompanying drawings in a particular order in the embodiments of the disclosure, this should not be construed as requiring that the operations be performed in the particular sequence shown or in a serial sequence, or that all of the operations shown be performed to obtain the desired results. Multitasking and parallel processing may be advantageous in particular environments.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for transmitting uplink control information, comprising:
determining, based on a priority of uplink control information and a priority of a Physical Uplink Shared Channel, a Physical Uplink Shared Channel for multiplexing the uplink control information, wherein the priority is a first priority or a second priority, and the first priority is higher than the second priority.

2. The method of claim 1, wherein a Physical Uplink Control Channel carrying the uplink control information and more than one Physical Uplink Shared Channel overlap in time domain.

3. The method of claim 2, wherein the priority of the uplink control information is the first priority, and the priority of the Physical Uplink Shared Channel for multiplexing the uplink control information is the first priority.

4. The method of claim 2, wherein the priority of the uplink control information is the second priority, and the priority of the Physical Uplink Shared Channel for multiplexing the uplink control information is the first priority.

5. The method of claim 4, further comprising:
determining that it is configured to allow the uplink control information of the second priority to be multiplexed on the Physical Uplink Shared Channel of the first priority.

6. The method of claim 5, further comprising: determining based on a radio resource control signaling, that it is configured to allow the uplink control information of the second priority to be multiplexed on the Physical Uplink Shared Channel of the first priority.

7. The method of claim 2, wherein the priority of the uplink control information is the second priority, and the priority of the Physical Uplink Shared Channel for multiplexing the uplink control information is the second priority.

8. The method of claim 7, further comprising:
determining that it is configured to not allow the uplink control information of the second priority to be multiplexed on a Physical Uplink Shared Channel of the first priority.

9. The method of claim 1, wherein a Physical Uplink Control Channel carrying the uplink control information and one Physical Uplink Shared Channel overlap in the time domain; and
the Physical Uplink Shared Channel for multiplexing the uplink control information is the Physical Uplink Shared Channel that overlaps with the Physical Uplink Control Channel carrying the uplink control information in the time domain.

10. The method of claim 1, wherein the priority of the Physical Uplink Shared Channel for multiplexing the uplink control information is the first priority.

11. The method of any one of claims 1 to 10, wherein the priority of the uplink control information is determined based on downlink control information or radio resource control information.

12. The method of any one of claims 1 to 10, wherein the priority of the Physical Uplink Shared Channel is determined based on downlink control information or radio resource control information.

13. An apparatus for transmitting uplink control information, comprising:
a processing unit, configured to determine, based on a priority of uplink control information and a priority of a Physical Uplink Shared Channel, a Physical Uplink Shared Channel for multiplexing the uplink control information, wherein the priority is a first priority or a second priority, and the first priority is higher than the second priority.

14. The apparatus of claim 13, wherein a Physical Uplink Control Channel carrying the uplink control information and more than one Physical Uplink Shared Channel overlap in the time domain, the two or more Physical Uplink Shared Channels respectively have the first priority or the second priority, and the first priority is higher than the second priority.

15. The apparatus of claim 14, wherein the priority of the uplink control information is the first priority and the priority of the Physical Uplink Shared Channel for multiplexing the uplink control information is the first priority.

16. The apparatus of claim 14, wherein the priority of the uplink control information is the second priority and the priority of the Physical Uplink Shared Channel for multiplexing the uplink control information is the first priority.

17. The apparatus of claim 16, wherein the processing unit is further configured to:
determine that it is configured to allow the uplink control information of the second priority to be multiplexed on the Physical Uplink Shared Channel of the first priority.

18. The apparatus of claim 17, wherein the processing unit is further configured to: based on a radio resource control signaling, determine that it is configured to allow the uplink control information of the second priority to be multiplexed on the Physical Uplink Shared Channel of the first priority.

19. The apparatus of claim 14, wherein the priority of the uplink control information is the second priority and the priority of the Physical Uplink Shared Channel for multiplexing the uplink control information is the second priority.

20. The apparatus of claim 19, wherein the processing unit is further configured to:
determine that it is configured to not allow the uplink control information of the second priority to be multiplexed on a Physical Uplink Shared Channel of the first priority.

21. The apparatus of claim 13, wherein a Physical Uplink Control Channel carrying the uplink control information and one Physical Uplink Shared Channel overlap in the time domain; and
the Physical Uplink Shared Channel for multiplexing the uplink control information is the Physical Uplink Shared Channel that overlaps with the Physical Uplink Control Channel carrying the uplink control information in the time domain.

22. The apparatus of claim 13, wherein the priority of the Physical Uplink Shared Channel for multiplexing the uplink control information is the first priority.

23. The apparatus of any one of claims 13 to 22, wherein the priority of the uplink control information is determined based on downlink control information or radio resource control information.

24. The apparatus of any one of claims 13 to 22, wherein the priority of the Physical Uplink Shared Channel is determined based on downlink control information or radio resource control information.

25. A device for transmitting uplink control information, comprising:
a processor;
a memory for storing instructions executable by the processor; wherein
the processor is configured to implement the method for transmitting uplink control information according to any one of claims 1 to 12.

26. A non-transitory computer-readable storage medium having instructions stored thereon, wherein when the instructions are executed by a processor of a mobile terminal, the mobile terminal is caused to implement the method for transmitting uplink control information according to any one of claims 1 to 12.
